# DEMANDE DE BREVET EUROPEEN

(11) **EP 1 518 836 A2**
(43) Date de publication de la demande: **30.03.2005**
(21) Numéro de dépôt: 04030245.7
(22) Date de dépôt: 13.09.1996
(51) Int. Cl.: C03C 17/00, C03C 8/20, C03C 17/34, C03C 17/25

(54) **Substrat à revêtement photocatalytique**

(30) Priorité: 15.09.1995 FR 9510839
(62) Demande divisionnaire de: 01106093.6
(71) Demandeur: SAINT-GOBAIN GLASS FRANCE, 92400 Courbevoie (FR)
(72) Inventeur: Boire, Philippe, 75015 Paris (FR); Talpaert, Xavier, 75019 Paris (FR)
(74) Mandataire: Colombier, Christian

(57) **Abrégé**

L'invention à pour objet l'utilisation d'un substrat (1) à base verrière, céramique ou vitro-céramique, muni sur au moins une partie d'au moins une de ses faces d'une couche mince (2) faisant barrière à la migration des alcalins provenant du substrat (1), surmontée par un revêtement (3) à propriété photocatalytique comportant de l'oxyde de titane au moins partiellement cristallisé et dont l'épaisseur est comprise entre 5 et 100 nm, ledit revêtement présentant sous l'effet du rayonnement solaire des propriétés photocatalytiques et un caractère hydrophile prononcé, pour éliminer par ruissellement d'eau, notamment de pluie, les salissures organiques et minérales déposées sur ledit revêtement.

## Description

L'invention concerne des substrats à base verrière, céramique ou vitrocéramique, plus particulièrement en verre, notamment transparents, que l'on munit de revêtements à propriétés photocatalytiques, en vue de fabriquer des vitrages d'applications diverses, comme les vitrages utilitaires, vitrages pour véhicules ou pour bâtiments.

De plus en plus, on cherche à fonctionnaliser les vitrages en déposant à leur surface des couches minces destinées à leur conférer une propriété particulière selon l'application visée. Ainsi, il existe des couches à fonction optique, comme les couches dites anti-reflet composées d'un empilement de couches alternativement à haut et bas indices de réfraction. Pour une fonction anti-statique, ou chauffante du type anti-givre, on peut aussi prévoir des couches minces conductrices électriquement, par exemple à base de métal ou d'oxyde métallique dopé. Pour une fonction thermique, de bas-émissivité ou anti-solaire par exemple, on peut se tourner vers des couches minces en métal du type argent ou à base de nitrure ou d'oxyde métallique. Pour obtenir un effet « anti-pluie », peuvent être prévues des couches à caractère hydrophobe, par exemple à base d'organo-silane fluoré ...

Cependant, il existe encore un besoin pour un substrat, notamment un vitrage que l'on pourrait qualifier « d'anti-salissures », c'est-à-dire visant la permanence dans le temps des propriétés d'aspect et de surface, et permettant notamment d'espacer les nettoyages et/ou d'améliorer la visibilité, en parvenant à éliminer au fur et à mesure les salissures se déposant progressivement à la surface du substrat, notamment les salissures d'origine organique comme les traces de doigts ou des produits organiques volatils présents dans l'atmosphère, ou même des salissures du type buée.

Or on sait qu'il existe certains matériaux semi-conducteurs, à base d'oxyde métallique, qui sont aptes, sous l'effet d'un rayonnement de longueur d'onde adéquate, à initier des réactions radicalaires provoquant l'oxydation de produits organiques : on parle en général de matériaux « photocatalytiques » ou encore « photo-réactifs ».

L'invention a alors pour but la mise au point de revêtements photocatalytiques sur substrat, qui présentent un effet « anti-salissures » marqué vis-à-vis du substrat et que !'on puisse fabriquer de manière industrielle.

L'invention a pour objet l'utilisation d'un substrat à base verrière, céramique ou vitrocéramique, notamment en verre et transparent, muni sur au moins une partie d'au moins une de ses faces d'une couche mince faisant barrière à la migration des alcalins provenant du substrat, surmontée par un revêtement à propriété photocatalytique comportant de l'oxyde de titane au moins partiellement cristallisé et dont l'épaisseur est comprise entre 5 et 100 nm, ledit revêtement présentant sous l'effet du rayonnement solaire des propriétés photocatalytiques et un caractère hydrophile prononcé, pour éliminer par ruissellement d'eau, notamment de pluie, les salissures organiques et minérales déposées sur ledit revêtement. L'oxyde de titane est cristallisé de préférence « in situ », lors de la formation du revêtement sur le substrat.

L'oxyde de titane fait en effet partie des semi-conducteurs qui, sous l'action de la lumière dans le domaine visible ou des ultraviolets, dégradent des produits organiques qui se déposent à leur surface. Choisir l'oxyde de titane pour fabriquer un vitrage à effet « anti-salissures » est donc particulièrement indiqué, et ce d'autant plus que cet oxyde présente une bonne résistance mécanique et chimique : pour être efficace longtemps, il est évidemment important que le revêtement conserve son intégrité, alors même qu'il se trouve directement exposé à de nombreuses agressions, notamment lors du montage du vitrage sur chantier (bâtiment) ou sur ligne de production (véhicule), ce qui implique des manipulations répétées par des moyens de préhension mécaniques ou pneumatiques, et également une fois le vitrage en place, avec des risques d'abrasion (essuie-glace, chiffon abrasif) et de contact avec des produits chimiques agressifs (polluants atmosphériques du type SO₂, produit d'entretien, ...).

Le choix s'est porté, en outre, sur un oxyde de titane qui soit au moins partiellement cristallisé parce qu'il a été montré qu'il était beaucoup plus performant en termes de propriété photocatalytique que l'oxyde de titane amorphe. De préférence, i! est cristallisé sous forme anatase, sous forme rutile ou sous forme d'un mélange d'anatase et de rutile, avec un taux de cristallisation d'au moins 25%, notamment d'environ 30 à 80%, notamment près de la surface, (la propriété étant plutôt une propriété de surface), (On comprend par taux de cristallisation la quantité en poids de TiO₂ cristallisé par rapport à la quantité en poids totale de TiO₂ dans le revêtement).

On a également pu observer, notamment dans le cas d'une cristallisation sous forme anatase, que l'orientation des cristaux de TiO₂ croissant sur le substrat avait une influence sur les performances photocatalytiques de l'oxyde : il existe une orientation privilégiée (1,1,0) qui favorise nettement la photocatalyse.

Avantageusement, la fabrication du revêtement est opérée de manière à ce que l'oxyde de titane cristallisé qu'il contient se trouve sous forme de « cristallites », au moins près de la surface, c'est-à-dire de monocristaux, ayant une taille moyenne comprise entre 0,5 et 100 nm, de préférence 1 à 50 nm, notamment 10 à 40 nm, plus particulièrement entre 20 et 30 nm. C'est en effet dans cette gamme de dimension que l'oxyde de titane parait avoir un effet photocatalytique optimal, vraisemblablement parce que les cristallites de cette taille développent une surface active importante.

Comme on le verra plus en détail ultérieurement, on peut obtenir le revêtement à base d'oxyde de titane de multiples façons :
□ par décomposition de précurseurs de titane (techniques de pyrolyse : pyrolyse liquide, pyrolyse de poudre, pyrolyse en phase vapeur dite CVD (Chemical Vapor Déposition), techniques associées au sol-gel : trempe ou dipping, cell-coating, ...),
□ par une technique sous vide (pulvérisation cathodique réactive ou non).

Le revêtement peut comporter également, outre l'oxyde de titane cristallisé, au moins un autre type de matériau minéral, notamment sous forme d'un oxyde amorphe ou partiellement cristallisé, par exemple un oxyde de silicium (ou mélange d'oxydes), de titane, d'étain, de zirconium ou d'aluminium. Ce matériau minéral peut aussi participer à l'effet photocatalytique de l'oxyde de titane cristallisé, en présentant lui-même un certain effet photocatalytique, même faible par rapport à celui du TiO₂ cristallisé, ce qui est le cas de l'oxyde d'étain ou de l'oxyde de titane amorphe.

Une couche d'oxyde « mixte » combinant ainsi de l'oxyde de titane au moins partiellement cristallisé à au moins un autre oxyde peut être intéressante sur le plan optique, tout particulièrement si l'autre ou les autres oxydes sont choisis d'indice inférieur à celui du TiO₂ : en abaissant l'indice de réfraction « global » du revêtement, on peut jouer sur !a réflexion lumineuse du substrat muni du revêtement, notamment abaisser cette réflexion. C'est le cas si, par exemple, on choisit une couche en TiO₂/Al₂O₃, dont un mode d'obtention est décrit dans le brevet EP-0 465 309, ou en TiO₂/SiO₂. Il est nécessaire, bien sûr, que le revêtement contienne cependant une teneur en TiO₂ suffisante pour conserver une activité photocatalytique notable. On considère, ainsi, qu'il est préférable que le revêtement contienne au moins 40% en poids, notamment au moins 50% en poids de TiO₂ par rapport au poids total d'oxyde(s) dans le revêtement.

On peut aussi choisir de superposer au revêtement selon l'invention une couche oléophobe et/ou hydrophobe greffée stable ou résistant à la photocatalyse, par exemple à base de l'organo-silane fluoré décrit dans les brevets US-5 368 892 et US-5 389 427, ainsi que du perfluoroalkylsilane décrit dans la demande de brevet FR-94/08734 du 13 juillet 1994 publiée sous le numéro FR-2 722 493 et correspondant au brevet européen EP-0 692 463, notamment de formule :

CF₃-(CF₂}ₙ-(CH₂)ₘ-SiX₃

dans laquelle n est de 0 à 12, m est de 2 à 5 et X est un groupe hydrolysable.

Pour amplifier l'effet photocatalytique de l'oxyde de titane du revêtement selon l'invention, on peut tout d'abord augmenter la bande d'absorption du revêtement, en incorporant au revêtement d'autres particules notamment métalliques et à base de cadmium, d'étain, de tungstène, de zinc, de cérium, ou de zirconium.

On peut aussi augmenter le nombre de porteurs de charge par dopage du réseau cristallin de l'oxyde de titane, en y insérant au moins un des éléments métalliques suivants : niobium, tantale, fer, bismuth, cobalt, nickel, cuivre, ruthénium, cérium, molybdène.

Ce dopage peut aussi se faire par un dopage de surface seulement de l'oxyde de titane ou de l'ensemble du revêtement, dopage de surface réalisé en recouvrant au moins une partie du revêtement d'une couche d'oxydes ou de sels métalliques, le métal étant choisi parmi le fer, le cuivre, !e ruthénium, le cérium, le molybdène, le vanadium et le bismuth,

Enfin, on peut amplifier le phénomène photocatalytique en augmentant le rendement et/ou la cinétique des réactions photocatalytiques, en recouvrant l'oxyde de titane, ou au moins une partie du revêtement qui l'incorpore, par un métal noble sous forme de couche mince du type platine, rhodium, argent, palladium.

Un tel catalyseur, par exemple déposé par une technique sous vide, permet en fait d'augmenter le nombre et/ou la durée de vie des entités radicalaires créées par l'oxyde de titane, et ainsi de favoriser les réactions en chaîne conduisant à la dégradation de produits organiques.

De manière tout à fait surprenante, le revêtement présente en fait non pas une propriété mais deux, dès qu'il est exposé à un rayonnement adéquat comme dans le domaine du visible et/ou les ultraviolets, tel qu'un rayonnement solaire : par la présence d'oxyde de titane photocatalytique, comme déjà vu, il favorise la disparition progressive, au fur et à mesure de leur accumulation, de salissures d'origine organique, en provoquant leur dégradation par un processus d'oxydation radicalaire. Les salissures minérales ne sont, elles, pas dégradées par ce processus : elles restent donc sur la surface, et, à part certaines cristallisations, elles sont en partie facilement évacuées puisqu'elles n'ont plus de raison d'adhérer à la surface, les agents organiques collants étant dégradés par photocatalyse.

Mais le revêtement de l'invention, s'auto-nettoyant en permanence, présente également de préférence une surface extérieure à caractère hydrophile et/ou oléophile prononcé, ce qui induit trois effets très avantageux :
□ un caractère hydrophile permet un mouillage parfait de l'eau qui peut se déposer sur le revêtement. Quand un phénomène de condensation de l'eau se produit, au lieu d'un dépôt de gouttelettes d'eau sous forme de buée gênant la visibilité, on a en fait un mince film continu d'eau qui se forme à la surface du revêtement et qui est tout à fait transparent. Cet effet « anti-buée » est notamment démontré par la mesure d'un angle de contact à l'eau inférieur à 5° après exposition à la lumière, et,
□ après ruissellement d'eau, de pluie notamment, sur une surface non traitée par une couche photocatalytique, de nombreuses gouttes d'eau de pluie restent accrochées sur la surface et laissent, une fois évaporées, des traces inesthétiques et gênantes, d'origine principalement minérale. En effet, une surface exposée à l'air ambiant se recouvre rapidement d'une couche de salissure qui limite son mouillage par l'eau. Ces salissures viennent s'ajouter aux autres salissures, notamment minérales (cristallisations, ...) apportées par l'atmosphère dans laquelle baigne le vitrage. Dans le cas d'une surface photoréactive, ces salissures minérales ne sont pas directement dégradées par photocatalyse. En fait, elles sont en très grande partie éliminées grâce au caractère hydrophile induit par l'activité photocatalytique. Ce caractère hydrophile provoque en effet un étalement parfait des gouttes de pluie. Les traces d'évaporation ne sont donc plus présentes. De plus, les autres salissures minérales présentes sur la surface sont lavées, ou redissoutes dans le cas de cristallisation, par le film d'eau et donc en grande partie évacuées. On obtient un effet « anti-salissure minérale » notamment induit par la pluie,
□ conjointement à un caractère hydrophile, le revêtement peut aussi présenter un caractère oléophile, permettant le « mouillage » des salissures organiques qui, comme pour l'eau, tendent alors à se déposer sur le revêtement sous forme d'un film continu moins visible que des « taches » bien localisées. On obtient ainsi un effet « anti-salissures organiques » qui s'opère en deux temps : dès qu'elle se dépose sur le revêtement, la salissure est déjà peu visible. Ensuite, progressivement, elle disparaît par dégradation radicalaire amorcée par photocatalyse.

Le revêtement peut être choisi de surface plus ou moins lisse. Une certaine rugosité peut en effet être avantageuse :
□ elle permet de développer une surface photocatalytique active plus grande et donc elle induit une plus grande activité photocatalytique,
□ elle a une influence directe sur le mouillage. La rugosité exalte en effet les propriétés de mouillage. Une surface lisse hydrophile sera encore plus « hydrophile une fois rendue rugueuse. On comprend par « rugosité », ici, aussi bien la rugosité de surface, que la rugosité induite par une porosité de la couche dans au moins une partie de son épaisseur.

Les effets précédents seront d'autant plus marqués que le revêtement est poreux et rugueux, d'où un effet superhydrophile des surfaces photoréactives rugueuses. Cependant, trop prononcée, la rugosité peut être pénalisante en favorisant l'incrustation, l'accumulation des salissures et/ou en faisant apparaître un niveau de flou inacceptable optiquement.

Il s'est ainsi avéré intéressant d'adapter le mode de dépôt des revêtements à base de TiO₂ de manière à ce qu'ils présentent une rugosité d'environ 2 à 20 nm, de préférence de 5 à 15 nm, cette rugosité étant évaluée par microscopie à force atomique, par mesure de la valeur de l'écart quadratique moyen (dit « Root Mean Square ou RMS en anglais) sur une surface de 1 micromètre carré. Avec de telles rugosités, les revêtements présentent un caractère hydrophile se traduisant par un angle de contact à l'eau pouvant être inférieur à 1°. On a également constaté qu'il était avantageux de favoriser une certaine porosité dans l'épaisseur du revêtement. Ainsi, si le revêtement n'est constitué que de TiO₂, il présente de préférence une porosité de l'ordre de 65 à 99%, notamment de 70 à 90%, la porosité étant définie ici de manière indirecte par le pourcentage de la densité théorique du TiO₂, qui est d'environ 3,8. Pour favoriser une telle porosité, un moyen consiste, par exemple, à déposer le revêtement par une technique du type sol-gel, impliquant la décomposition de matériaux de type organo-métalliques : on peut alors introduire dans la solution, outre le ou les précurseur(s) organo-métallique(s), un polymère organique du type polyéthylène glycol PEG : en durcissant la couche par chauffage, on brûle le PEG, ce qui engendre ou amplifie une certaine porosité dans l'épaisseur de la couche.

L'épaisseur du revêtement selon l'invention est variable, elle est de préférence comprise entre 5 nm et 1 micron, notamment entre 5 et 100 nm, notamment entre 10 et 80 nm, ou entre 20 et 50 nm. En fait, le choix de l'épaisseur peut dépendre de différents paramètres, notamment de l'application envisagée du substrat du type vitrage, ou encore de la taille des cristallites de TiO₂ dans le revêtement ou de la présence d'alcalins en forte proportion dans le substrat.

Entre le substrat et le revêtement selon l'invention, on peut disposer une ou plusieurs autres couches minces à fonction différente ou complémentaire de celle du revêtement. Il peut s'agir, notamment, de couches à fonction anti-statique, thermique, optique, ou favorisant la croissance cristalline de TiO₂ sous forme anatase ou rutile, ou de couches faisant barrière à la migration de certains éléments provenant du substrat, notamment faisant barrière aux alcalins et tout particulièrement aux ions sodium quand le substrat est en verre.

On peut aussi envisager un empilement de couches « anti-reflets » alternant des couches minces à haut et bas indices, le revêtement selon l'invention constituant la dernière couche de l'empilement. Dans ce cas, i! est préférable que le revêtement soit d'indice de réfraction relativement peu élevé, ce qui est le cas quand il est constitué d'un oxyde mixte de titane et de silicium.

La couche à fonction anti-statique et/ou thermique (chauffante en la munissant d'amenées de courant, bas-émissive, anti-solaire, ...) peut notamment être choisie à base d'un matériau conducteur du type métal, comme l'argent, ou du type oxyde métallique dopé comme l'oxyde d'indium dope à l'étain ITO, l'oxyde d'étain dopé avec un halogène du type fluor SnO₂:F, ou avec de l'antimoine SnO₂:Sb, ou de l'oxyde de zinc dopé à l'indium ZnO:In, au fluor ZnO:F, à l'aluminium ZnO:Al ou à l'étain ZnO:Sn. Il peut aussi s'agir d'oxydes métalliques sous-stoechiométriques en oxygène, comme SnO₂₋ₓ ou ZnO₂₋ₓ avec x < 2.

La couche à fonction anti-statique a de préférence une valeur de résistance carrée de 20 à 1000 ohms/carré. On peut prévoir de la munir d'amenées de courant afin de la polariser (tensions d'alimentation par exemple comprises entre 5 et 100V). Cette polarisation contrôlée permet notamment de lutter contre le dépôt de poussières de taille de l'ordre du millimètre susceptibles de se déposer sur le revêtement, notamment des poussières sèches adhérentes que par effet électro-statique : en inversant brutalement la polarisation de la couche, on « éjecte » ces poussières.

La couche mince à fonction optique peut être choisie afin de diminuer la réflexion lumineuse et/ou rendre plus neutre la couleur en réflexion du substrat. Elle présente dans ce cas, de préférence, un indice de réfraction intermédiaire entre celui du revêtement et celui du substrat et une épaisseur optique appropriée, et peut être constituée d'un oxyde ou d'un mélange d'oxydes du type oxyde d'aluminium Al₂O₃, oxyde d'étain SnO₂, oxyde d'indium In₂O₃, oxycarbure ou oxynitrure de silicium. Pour obtenir une atténuation maximale de la couleur en réflexion, il est préférable que cette couche mince présente un indice de réfraction proche de la racine carrée du produit des carrés des indices de réfraction des deux matériaux qui l'encadrent, c'est-à-dire le substrat et le revêtement selon l'invention. Parallèlement, il est avantageux de choisir son épaisseur optique (c'est-à-dire le produit de son épaisseur géométrique et de son indice de réfraction) voisine de lambda/4, lambda étant approximativement la longueur d'onde moyenne dans le visible, notamment d'environ 500 à 550 nm.

La couche mince à fonction de barrière aux alcalins peut être notamment choisie à base d'oxyde, de nitrure, d'oxynitrure ou d'oxycarbure de silicium, en oxyde d'aluminium contenant du fluor Al₂O₃:F, ou encore en nitrure d'aluminium. En fait, elle s'est avérée utile quand le substrat est en verre, car la migration d'ions sodium dans le revêtement selon l'invention peut, dans certaines conditions, en altérer les propriétés photocatalytiques.

La nature du substrat ou de la sous-couche a en outre un intérêt supplémentaire : elle peut favoriser la cristallisation de la couche photocatalytique que l'on dépose, notamment dans le cas du dépôt CVD.

Ainsi, lors de dépôt par CVD de TiO₂, une sous-couche de SnO₂:F cristallisée favorise la croissance de TiO₂ sous forme majoritairement rutile, notamment pour des températures de dépôt de l'ordre de 400° à 500°C, alors que la surface d'un verre sodo-calcique ou d'une sous-couche d'oxycarbure de silicium induit plutôt une croissance anatase, notamment pour des températures de dépôt de l'ordre de 400° à 600°C.

Toutes ces couches minces optionnelles peuvent, de manière connue, être déposées par des techniques sous vide du type pulvérisation cathodique ou par d'autres techniques du type décomposition thermique telles que les pyrolyses en phase solide, liquide ou gazeuse. Chacune des couches pré-mentionnées peut cumuler plusieurs fonctions, mais on peut aussi les superposer.

L'invention a également pour objet les vitrages « anti-salissures » (salissures organiques et/ou minérales) et/ou « anti-buée », qu'ils soient monolithiques, multiples isolants du type double-vitrage ou feuilletés, et qui incorporent les substrats revêtus précédemment décrits.

L'invention vise donc la fabrication de produits verriers, céramiques ou vitrocéramiques, et tout particulièrement la fabrication de vitrages « autonettoyants ». Ceux-ci peuvent avantageusement être des vitrages de bâtiment, comme des double-vitrages (on peut alors disposer le revêtement « côté extérieur » et/ou « côté intérieur », c'est-à-dire en face 1 et/ou en face 4). Cela s'avère tout particulièrement intéressant pour les vitrages peu accessibles au nettoyage et/ou qui ont besoin d'être nettoyés très fréquemment.. comme des vitrages de toiture, des vitrages d'aéroports... Il peut aussi s'agir de vitrages pour véhicules où le maintien de la visibilité est un critère essentiel de sécurité. Ce revêtement peut ainsi être disposé sur des pare-brise, latéraux ou lunettes arrière de voiture, notamment sur la face des vitrages tournée vers l'intérieur de l'habitacle. Ce revêtement peut alors éviter la formation de buée, et/ou supprimer les traces de salissures du type trace de doigts, nicotine ou matériau organique du type plastifiant volatil relargué par le plastique habillant l'intérieur de l'habitacle, notamment celui du tableau de bord (relargage connu parfois sous le terme anglais de « fogging »). D'autres véhicules tels qu'avions ou trains peuvent aussi trouver intérêt à utiliser des vitrages munis du revêtement de l'invention.

Nombre d'autres applications sont possibles, notamment pour les verres d'aquarium, les vitrines de magasin, les serres, les vérandas, les verres utilisés dans l'ameublement intérieur ou le mobilier urbain, mais aussi les miroirs, les écrans de télévision, le domaine de !a lunetterie ou tout matériau d'architecture du type matériau de façade, de bardage, de toiture tel que des tuiles, ...

L'invention permet ainsi de fonctionnaliser ces produits connus, en leur conférant des propriétés anti-ultraviolet, anti-salissure, bactéricide, anti-reflet, anti-statique, anti-microorganisme, ...

Une autre application intéressante du revêtement selon l'invention consiste à l'associer à un vitrage à absorption variable commandée électriquement du type vitrage électrochrome, vitrage à cristaux liquides éventuellement avec colorant dichroïque, vitrage à système de particules suspendues, vitrage viologène... Tous ces vitrages étant constitués en général d'une pluralité de substrats transparents entre lesquels sont disposés les éléments « actifs », on peut alors avantageusement disposer le revêtement sur la face extérieure d'au moins un de ces substrats.

Notamment dans le cas d'un vitrage électrochrome, lorsque ce dernier est à l'état coloré, son absorption conduit à un certain échauffement en surface, ce qui, de fait, est susceptible d'accélérer la décomposition photocatalytique des substances carbonées se déposant sur le revêtement selon l'invention. Pour plus de détails sur la structure d'un vitrage électrochrome, on se reportera avantageusement à la demande de brevet EP-A-0 575 207 décrivant un double vitrage feuilleté électrochrome, le revêtement selon l'invention pouvant, de préférence, être disposé en face 1.

L'invention a également pour objet les différents procédés d'obtention du revêtement selon l'invention. On peut avoir recours à une technique de dépôt du type pyrolyse, intéressante car elle permet notamment le dépôt du revêtement en continu, directement sur le ruban de verre float, lorsqu'on utilise un substrat verrier.

La pyrolyse peut s'effectuer en phase solide, à partir de poudre(s) de précurseur(s) du type organo-métallique(s).

La pyrolyse peut s'effectuer en phase liquide, à partir d'une solution comprenant un précurseur organo-métallique de titane du type chélate de titane et/ou alcoolate de titane. On mélange de tels précurseurs à au moins un autre précurseur organo-métallique. Pour plus de détails sur la nature du précurseur de titane ou sur les conditions de dépôt, on se rapportera par exemple aux brevets FR-2 310 977 et EP-0 465 309.

La pyrolyse peut aussi s'effectuer en phase vapeur, technique que l'on désigne également sous le terme de CVD (Chemical Vapor Deposition), à partir d'au moins un précurseur de titane du type halogénure tel que TiCl₄ ou alcoolate de titane du type tétraisopropylate de Ti, Ti(OiPr)₄. La cristallisation de la couche peut en outre être contrôlée par le type de sous-couche, comme évoqué précédemment.

On peut également déposer le revêtement par d'autres techniques, notamment par les techniques associées au « sol-gel ». Différents modes de dépôt sont possibles, comme le « trempé » aussi appelé « dip-coating » ou un dépôt à l'aide d'une cellule appelé « cell-coating ». Il peut aussi s'agir d'un mode de dépôt par « spray-coating » ou par enduction laminaire, cette dernière technique étant détaillée dans la demande de brevet WO-94/01 598. Tous ces modes de dépôt utilisent en général une solution comprenant au moins un précurseur organo-métallique, notamment de titane du type alcoolate que l'on décompose thermiquement après enduction du substrat par la solution sur l'une de ses faces, ou sur ses deux faces.

Il peut être intéressant, par ailleurs, de déposer le revêtement, quelle que soit la technique de dépôt envisagée, non pas en une seule fois, mais par au moins deux étapes successives, ce qui parait favoriser la cristallisation de l'oxyde de titane sur toute l'épaisseur du revêtement lorsqu'on le choisit relativement épais.

De même, il est avantageux de faire subir au revêtement à propriété photocatalytique, après dépôt, un traitement thermique du type recuit. Un traitement thermique est indispensable pour une technique du type sol-gel ou enduction laminaire afin de décomposer le(s) précurseur(s) organo-métallique(s) en oxyde, une fois l'enduction du substrat effectuée et améliorer la résistance à l'abrasion, ce qui n'est pas le cas lorsqu'on utilise une technique de pyrolyse où le précurseur se décompose dès qu'il se trouve au contact du substrat. Dans le premier cas comme dans le second, cependant, un traitement thermique post-dépôt, une fois le TiO₂ formé, améliore son taux de cristallisation. La température de traitement choisie peut en outre permettre de mieux contrôler le taux de cristallisation et la nature cristalline, anatase et/ou rutile, de l'oxyde.

Cependant, dans le cas d'un substrat de verre sodo-calcique, des recuissons multiples et prolongées peuvent favoriser une atténuation de l'activité photocatalytique à cause d'une trop grande migration des alcalins du substrat vers la couche photoréactive. L'utilisation d'une couche barrière entre le substrat, s'il est en verre standard, et le revêtement, ou le choix d'un substrat de verre de composition adéquate, ou encore le choix d'un verre sodo-calcique dont la surface est désalcalinisée, permettent de s'affranchir de ce risque.

D'autres détails et caractéristiques avantageuses de l'invention ressortent de la description ci-après d'exemples de réalisation non limitatifs, à l'aide des figures suivantes :
- **figure 1 :** une coupe transversale d'un substrat verrier muni du revêtement selon l'invention,
- **figure 2 :** un schéma d'une technique de dépôt sol-gel, dite « par trempé » ou par « dip-coating » du revêtement,
- **figure 3 :** un schéma d'une technique de dépôt dite « cell-coating »,
- **figure 4 :** un schéma d'une technique de dépôt dite « spray-coating »,
- **figure 5 :** un schéma d'une technique de dépôt par enduction laminaire.

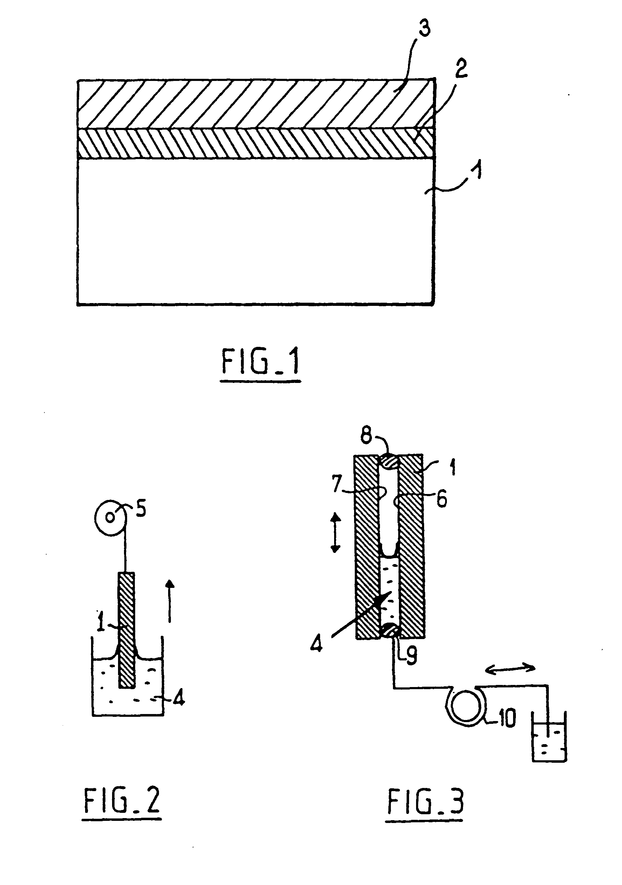

Comme représenté de manière extrêmement schématique en figure 1, tous les exemples suivants concernent le dépôt d'un revêtement 3 dit « anti-salissures » essentiellement à base d'oxyde de titane sur un substrat transparent 1.

Le substrat 1 est en verre clair silico-sodo-calcique de 4 mm d'épaisseur et 50 cm de long et de large. Il va de soi que l'invention n'est pas limitée à ce type spécifique de verre. Le verre peut en outre ne pas être plan, mais bombé.

Entre le revêtement 3 et substrat 1, se trouve une couche mince optionnelle 2 soit à base d'oxycarbure de silicium noté SiOC en vue de constituer une barrière à la diffusion aux alcalins et/ou une couche atténuant la réflexion lumineuse, soit à base d'oxyde d'étain dopé au fluor SnO₂:F en vue de constituer une couche anti-statique et/ou bas-émissive, même à effet bas-émissif peu accentué, et/ou atténuant la couleur notamment en réflexion.

### EXEMPLES 1 A 3

Les exemples 1 à 3 concernent un revêtement 3 déposé à l'aide d'une technique de pyrolyse en phase liquide. On peut procéder en continu, en utilisant une buse de distribution adaptée disposée transversalement et au-dessus du ruban de verre float, au sortir de l'enceinte du bain float proprement dit. Ici, on a procédé de façon discontinue, en utilisant une buse mobile disposée face au substrat 1 déjà découpé aux dimensions indiquées, substrat qui est d'abord chauffé dans un four à une température de 400 à 650°C avant de défiler à vitesse constante devant la buse projetant une solution appropriée.

### EXEMPLE 1

Dans cet exemple, il n'y a pas de couche optionnelle 2. Le revêtement 3 est déposé à l'aide d'une solution comprenant deux précurseurs organo-métalliques de titane, le di-iso-propoxy di-acétylacétonate de titane et le tétra-octylène glycolate de titane dissous dans un mélange de deux solvants, qui sont de l'acétate d'éthyle et de l'isopropanol.

On peut noter que d'autres précurseurs de même type sont tout à fait utilisables également, notamment d'autres chélates de titane du type acétylacétonate de titane, méthylacétoacétate de titane, éthylacétoacétate de titane ou encore le titane tri-éthanol amine ou le titane di-éthanol amine.

Dès que le substrat 1 a atteint la température voulue dans le four, soit notamment environ 500°C, celui-ci défile devant la buse projetant à température ambiante le mélange indiqué à l'aide d'air comprimé.

On obtient alors une couche de TiO₂ d'environ 90 nm d'épaisseur, l'épaisseur pouvant être contrôlée par la vitesse de défilement du substrat 1 devant la buse et/ou la température dudit substrat. La couche est partiellement cristallisée sous forme anatase.

Cette couche présente une excellente tenue mécanique. Sa résistance aux tests d'abrasion est comparable à celle obtenue pour la surface du verre nu.

Elie est bombable et trempable. Elle ne présente pas de voile : la transmission lumineuse diffuse du substrat revêtu est inférieure à 0.6% (mesurée selon l'illuminant D₆₅ à 560 nm).

### EXEMPLE 2

Il renouvelle l'exemple 1, mais en intercalant entre le substrat 1 et revêtement 3 une couche 2 en SnO₂:F de 73 nm d'épaisseur. Cette couche est obtenue par pyrolyse de poudre à partir de difluorure de dibutylétain DBTF. On peut aussi l'obtenir, de manière connue, par pyrolyse en phase liquide ou vapeur, comme cela est par exemple décrit dans la demande de brevet EP-A-0 648 196. En phase vapeur, on peut notamment utiliser un mélange de mono-butyl trichlorure d'étain et d'un précurseur fluoré associé éventuellement à un oxydant « doux » du type H₂O.

L'indice de la couche obtenue est d'environ 1,9. Sa résistance carrée est d'environ 50 ohms.

Dans l'exemple 1 précédent, le substrat 1 revêtu, monté en double-vitrage de manière à ce que le revêtement soit en face 1 (avec un autre substrat 1' non revêtu mais de même nature et dimensions que le substrat 1 par l'intermédiaire d'une lame d'air de 12 mm) présente une valeur de pureté de couleur en réflexion de 26% et une valeur de pureté de couleur en transmission de 6,8%.

Dans cet exemple 2, la pureté de couleur en réflexion (dans les dorés) n'est plus que de 3,6%, et elle est de 1,1 % en transmission.

Ainsi, la sous-couche en SnO₂:F permet de conférer au substrat des propriétés anti-statiques dues à sa conductivité électrique, elle a également une influence favorable sur la colorimétrie du substrat, en rendant nettement plus « neutre » sa coloration, aussi bien en transmission qu'en réflexion, coloration provoquée par la présence du revêtement 3 d'oxyde de titane présentant un indice de réfraction relativement élevé. On peut la polariser en la munissant d'une alimentation électrique adaptée, pour limiter le dépôt de poussières de taille relativement importante de l'ordre du millimètre.

En outre, cette sous-couche diminue la diffusion des alcalins dans la couche photocatalytique de TiO₂. L'activité photocatalytique est donc améliorée.

### EXEMPLE 3

Il renouvelle l'exemple 2, mais en intercalant cette fois entre substrat 1 et revêtement 3 une couche 2 à base d'oxycarbure de silicium, d'indice d'environ 1,75 et d'épaisseur environ 50 nm, couche que l'on peut obtenir par CVD à partir d'un mélange de SiH₄ et d'éthylène en dilution dans de l'azote, comme décrit dans la demande de brevet EP-A-0 518 755. Cette couche est particulièrement efficace pour empêcher la tendance à la diffusion d'alcalins (Na⁺ , K⁺) et d'alcalino-terreux (Ca⁺⁺) provenant du substrat 1 vers le revêtement 3 et donc l'activité photocatalytique est nettement améliorée. Ayant, comme SnO₂:F, un indice de réfraction intermédiaire entre celui du substrat (1,52) et du revêtement 3 (environ 2,30 à 2,35), elle permet également d'atténuer l'intensité de la coloration du substrat aussi bien en réflexion qu'en transmission et de diminuer globalement la valeur de réflexion lumineuse R_{L} dudit substrat.

Les exemples 4 à 7 suivants concernent des dépôts par CVD.

### EXEMPLES 4 A 7

### EXEMPLE 4

Cet exemple concerne le dépôt par CVD du revêtement 3 directement sur le substrat 1, à l'aide d'une buse standard comme celle représentée dans la demande de brevet EP-A-0 518 755 précitée. Comme précurseurs, on utilise soit un organo-métallique, soit un halogénure métallique. Ici on choisit comme organo-métallique le tétra-isopropylate de titane, intéressant pour sa grande volatilité et sa grande plage de températures d'utilisation, de 300 à 650°C. Le dépôt s'effectue dans cet exemple à environ 425°C, l'épaisseur de TiO₂ est de 15 nm.

Le tétra-éthoxy titane Ti(O-Et)₄ peut aussi convenir, et comme halogénure, on peut citer TiCl₄.

### EXEMPLE 5

Il s'effectue similairement à l'exemple 4, sauf qu'ici on dépose la couche de 15 nm de TiO₂ non pas directement sur le verre, mais sur une sous-couche en SiOC de 50 nm déposée comme dans l'exemple 3.

### EXEMPLE 6

Il s'effectue comme l'exemple 4, sauf qu'ici l'épaisseur de la couche de TiO₂ est de 65 nm.

### EXEMPLE 7

Il s'effectue comme à l'exemple 5, sauf qu'ici l'épaisseur de la couche de TiO₂ est de 60 nm.

De ces exemples 4 à 7, on constate que les substrats ainsi revêtus présentent une bonne tenue mécanique aux tests d'abrasion. En particulier, on n'observe pas de délamination de la couche de TiO₂.

### EXEMPLE 8

Cet exemple utilise une technique associée au sol-gel utilisant un mode de dépôt par « trempé » encore appelé « dip-coating » dont le principe ressort de la figure 2 : il s'agit d'immerger le substrat 1 dans la solution liquide 4 contenant le(s) précurseur(s) adéquat(s) du revêtement 3, puis d'en extraire le substrat 1 à vitesse contrôlée à l'aide d'un moyen moteur 5, le choix de la vitesse d'extraction permettant d'ajuster l'épaisseur de solution restant à la surface des deux faces du substrat et, de fait, l'épaisseur des revêtements déposés, après traitement thermique de ce dernier pour à la fois évaporer le solvant et décomposer le ou les précurseurs en oxyde.

On utilise pour déposer le revêtement 3 une solution 4 comprenant soit du tétrabutoxyde de titane Ti(O-Bu)₄ stabilisé avec de la diéthanol amine DEA en proportion molaire 1:1 dans un solvant type éthanol à 0,2 mole de tétrabutoxyde par litre d'éthanol, soit le mélange de précurseurs et de solvants décrits dans l'exemple 1. (Peut aussi être utilisé un autre précurseur comme le dibutoxy-diéthanolamine de titane).

Les substrats 1 peuvent comporter des sous-couches SiOC.

Après extraction de chacune des solutions 4, les substrats 1 sont chauffés 1 heure à 100°C puis environ 3 heures à 550°C avec une montée en température progressive.

On obtient sur chacune des faces un revêtement 3, dans les deux cas en TiO₂ bien cristallisé sous forme anatase.

### EXEMPLE 9

Cet exemple utilise la technique appelée « cell-coating » dont le principe est rappelé dans la figure 3. Il s'agit de former une cavité étroite délimitée par deux faces sensiblement parallèles 6, 7 et deux joints 8, 9, au moins une de ces faces 6, 7 étant constituée par la face du substrat 1 à traiter. Puis on remplit la cavité de la solution 4 de précurseur(s) du revêtement, et on retire la solution 4 de manière contrôlée, de manière à former un ménisque de mouillage à l'aide d'une pompe 10 péristaltique par exemple, en laissant un film de la solution 4 sur la face du substrat 1 au fur et à mesure du retrait de la solution.

La cavité 5 est ensuite maintenue au moins le temps nécessaire à un séchage. Le durcissement du film est effectué par traitement thermique. L'avantage de cette technique par rapport au « dip-coating » est notamment que l'on peut traiter qu'une seule des deux faces du substrat 1, et non les deux systématiquement, à moins d'avoir recours à un système de masquage.

Les substrats 1 comportent des couches minces 2 à base d'oxycarbure de silicium SiOC.

L'exemple 6 utilise respectivement les solutions 4 décrites dans l'exemple 8. Les mêmes traitements thermiques sont ensuite opérés pour obtenir le revêtement 3 de TiO₂.

Le revêtement 3 présente une bonne durabilité mécanique.

Il apparaît au MEB (microscope électronique à balayage) un effet de champ sous la forme de « grains » de monocristaux de diamètre environ 30 nm. La rugosité de ce revêtement induit des propriétés de mouillage exaltées par rapport à un revêtement non rugueux.

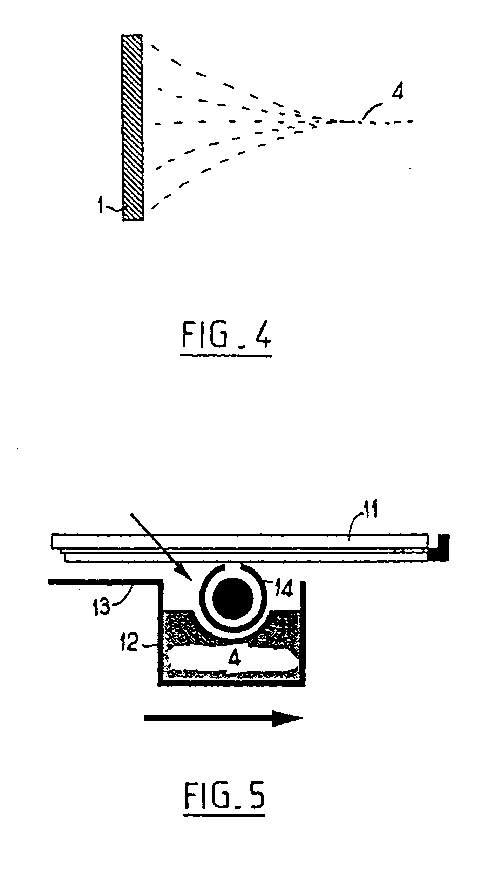

Ces mêmes solutions 4 peuvent être également utilisées pour déposer des revêtements par « spray-coating », comme représenté en figure 4, ou l'on pulvérise la solution 4 sous forme d'un nuage contre le substrat 1 en statique, ou par enduction laminaire comme représenté en figure 5. Dans ce dernier cas, on fait passer le substrat 1, maintenu par succion sous vide, contre un support 11 en inox et Téflon au-dessus d'un réservoir 12 contenant la solution, solution dans laquelle est partiellement immergé un cylindre 14 fendu, on déplace ensuite l'ensemble du réservoir 12 et du cylindre 14 sur toute la longueur du substrat 1, le masque 13 évitant une évaporation trop rapide du solvant de la solution 4. Pour plus de détails sur cette dernière technique, on se reportera avantageusement à la demande de brevet WO-94/01598 précitée.

Des tests ont été effectués sur les substrats obtenus selon les exemples précédents afin de caractériser les revêtements déposés et évaluer leurs performances « anti-buée » et « anti-salissures ».
□ **Test 1** : c'est le test des figures de buée. Il consiste à observer les conséquences de la photocatalyse et de la structure du revêtement (taux de groupes hydroxyl, porosité, rugosité) sur le mouillage. Si !a surface est photoréactive, les micro-pollutions carbonées qui se déposent sur le revêtement sont détruites en permanence, et la surface est hydrophile donc anti-buée. On peut aussi faire une évaluation quantitative en réchauffant brusquement le substrat revêtu initialement, entreposé au froid ou simplement en soufflant sur le substrat, en mesurant s'il apparaît de la buée et dans l'affirmative, à quel moment, puis en mesurant le temps nécessaire à la disparition de ladite buée.
□ **Test 2** : if s'agit d'évaluer l'hydrophilie et l'oléophilie à la surface du revêtement 3, en comparaison de celles de la surface d'un verre nu, par la mesure d'angles de contact d'une goutte d'eau et d'une goutte de DOP (di-octyl-phtalate) à leurs surfaces, après avoir laissé les substrats une semaine à l'atmosphère ambiante sous éclairage naturel, dans le noir puis les avoir soumis 20 minutes à un rayonnement UVA.
□ **Test 3 :** il consiste à déposer sur le substrat à évaluer une couche d'un organosilane et à l'irradier par des U.V.A. de manière à la dégrader par photocatalyse. L'organosilane modifiant les propriétés de mouillage, les mesures d'angle de contact à l'eau du substrat au cours de l'irradiation indiquent l'état de dégradation de la couche greffée. La vitesse de disparition de cette couche est reliée à l'activité photocatalytique du substrat.

L'organosilane greffé est un trichlorosilane : l'octadécyltrichlorosilane (OTS). Le greffage est réalisé par trempé.

L'appareil de test est constitué d'un carrousel tournant autour de 1 à 6 lampes U.V.A. basse pression. Les éprouvettes à évaluer sont placées dans le carrousel, la face à évaluer du côté du rayonnement U.V.A. Selon leur position et le nombre de lampes allumées, chaque éprouvette reçoit une irradiation U.V.A. variant de 0,5 W/m² à 50 W/m². Pour les exemples 1, 2, 3, 8 et 9, la puissance d'irradiation est choisie de 1,8 W/m², et pour les exemples 4 à 7 de 0,6 W/m².

Le temps entre chaque mesure de l'angle de contact varie entre 20 min et 3 h, selon l'activité photocatalytique de l'éprouvette considérée. Les mesures sont effectuées à l'aide d'un goniomètre.

Avant irradiation, les verres présentent un angle d'environ 100°. On considère que la couche est détruite après irradiation lorsque l'angle est inférieur à 20°.

Chaque éprouvette testée est caractérisée par la vitesse moyenne de disparition de la couche, donnée en nanomètre par heure, c'est-à-dire l'épaisseur de la couche d'organosilane déposée divisée par la durée d'irradiation permettant d'atteindre un palier final inférieur à 20° (temps de disparition de la couche d'organosilane).

Tous les exemples précédents réussissent le test 1, c'est-à-dire que lorsqu'on souffle sur les substrats revêtus du revêtement, ils restent parfaitement transparents, alors que se dépose une couche de buée bien visible sur des substrats non revêtus.

Les exemples ont subi le test 2 : les substrats revêtus, après exposition aux rayonnements UVA, présentent un angle de contact à l'eau et au DOP d'au plus 5°. Au contraire, un verre nu dans les mêmes conditions présente un angle de contact à l'eau de 40° et un angle de contact au DOP de 20°.

Le tableau ci-dessous regroupe les résultats des substrats revêtus selon les exemples précédents au test 3.

| Substrat | Test 3 de mouillage à 1,8 W/m² U.V.A. (en nm/h) |
|---|---|
| Exemple 1 (TiO₂ sur verre nu) | 0,03 |
| Exemple 2 (TiO₂ sur SnO₂:F) | 0,1 |
| Exemple 3 (TiO₂ sur SiOC) | 0,2 |
| Exemple 8 (TiO₂ sur 50 nm SiOC) | 5 |
| Exemple 9 (TiO₂ sur 50 nm SiOC) | 5 |
| Verre nu | 0 |

| Substrat (CVD) | Test 3 de mouillage à 0,6 W/m² U.V.A. (en nm/h) |
|---|---|
| Exemple 4 (TiO₂ sur verre nu) | < 0,05 nm/h |
| Exemple 5 (TiO₂ sur SiOC) | 4 |
| Exemple 6 (TiO₂ sur verre nu) | 9 |
| Exemple 7 (TiO₂ sur SiOC) | 19,5 |

Du tableau, on peut constater que la présence de sous-couches, notamment en SiOC, favorise l'activité photocatalytique du revêtement contenant le TiO₂, par son effet de barrière aux alcalins et alcalino-terreux pouvant migrer du verre (comparaison des exemples 4 et 5 ou 6 et 7).

On observe aussi que l'épaisseur du revêtement contenant le TiO₂ joue également un rôle (comparaison des exemples 1 et 3) : pour une épaisseur de revêtement en TiO₂ supérieure à la taille moyenne des mono-cristaux ou « cristallites », on obtient un meilleur effet photocatalytique.

En fait, on a pu observer que ce sont les revêtements en TiO₂ obtenus par CVD qui présentent la cristallisation la plus poussée, avec des tailles de cristallites de l'ordre de 20 à 30 nm. On peut constater que l'activité photocatalytique de l'exemple 6 (65 nm de TiO₂) est nettement supérieure à celle de l'exemple 4 (15 nm de TiO₂ seulement). Il est donc avantageux de prévoir une épaisseur de revêtement de TiO₂ au moins deux fois supérieure au

## Revendications

1. Utilisation d'un substrat (1) à base verrière, céramique ou vitrocéramique, muni sur au moins une partie d'au moins une de ses faces d'une couche mince (2) faisant barrière à la migration des alcalins provenant du substrat (1), surmontée par un revêtement (3) à propriété photocatalytique comportant de l'oxyde de titane au moins partiellement cristallisé et dont l'épaisseur est comprise entre 5 et 100 nm, ledit revêtement présentant sous l'effet du rayonnement solaire des propriétés photocatalytiques et un caractère hydrophile prononcé, pour éliminer par ruissellement d'eau, notamment de pluie, les salissures organiques et minérales déposées sur ledit revêtement.

2. Utilisation selon la revendication 1, **caractérisée en ce que** l'oxyde de titane cristallisé est sous forme anatase, sous forme rutile ou sous forme d'un mélange d'anatase et de rutile.

3. Utilisation selon l'une des revendications 1 ou 2, **caractérisée en ce que** l'épaisseur du revêtement (3) est comprise entre 5 et 50 nm.

4. Utilisation selon l'une des revendications précédentes, **caractérisée en ce que** l'oxyde de titane cristallisé est sous forme de cristallites de taille moyenne comprise entre 0,5 et 60 nm, de préférence 1 à 50, notamment 10 à 40 nm.

5. Utilisation selon l'une des revendications précédentes, **caractérisée en ce que** le revêtement (3) comporte également un matériau minéral, notamment sous forme d'un oxyde ou mélange d'oxydes amorphe ou partiellement cristallisé du type oxyde de silicium, oxyde de titane, oxyde d'étain, oxyde de zirconium, oxyde d'aluminium.

6. Utilisation selon l'une des revendications précédentes, **caractérisée en ce que** le revêtement comprend des additifs aptes à amplifier le phénomène photocatalytique dû à l'oxyde de titane, notamment en augmentant la bande d'absorption du revêtement et/ou en augmentant le nombre de porteurs de charges par dopage du réseau cristallin de l'oxyde ou par dopage de surface du revêtement et/ou en augmentant rendement et cinétique des réactions photocatalytiques en recouvrant au moins une partie du revêtement par un catalyseur.

7. Utilisation selon la revendication 6, **caractérisée en ce que** le réseau cristallin de l'oxyde de titane est dopé, notamment par au moins un des éléments métalliques du groupe comprenant le niobium, le tantale.

8. Utilisation selon la revendication 6, **caractérisée en ce que** l'oxyde de titane ou le revêtement (3) dans son ensemble est revêtu d'un catalyseur, notamment sous la forme de couche mince de métal noble du type platine, rhodium, argent, palladium.

9. Utilisation selon la revendication 6, **caractérisée en ce que** le revêtement incorpore des éléments métalliques, notamment sous forme de particules, visant à augmenter sa bande d'absorption, éléments choisis parmi l'étain, le cadmium, le tungstène, le cérium ou le zirconium.

10. Utilisation selon la revendication 6, **caractérisée en ce que** le dopage de surface de l'oxyde de titane ou du revêtement qui le comporte est réalisé en recouvrant au moins une partie dudit revêtement d'une couche d'oxyde ou de sels métalliques, le métal étant choisi parmi le fer, le cuivre, le ruthénium, le cérium, le molybdène, le bismuth, le vanadium.

11. Utilisation selon l'une des revendications précédentes, **caractérisée en ce que** la surface du revêtement (3) possède un angle de contact à l'eau inférieur à 5° après exposition à un rayonnement lumineux

12. Utilisation selon l'une des revendications précédentes, **caractérisée en ce que** l'épaisseur du revêtement (3) est comprise entre 5 et 20 nm.

13. Utilisation selon l'une des revendications précédentes, **caractérisée en ce que** la rugosité RMS du revêtement (3) est comprise entre 2 et 20 nm, notamment entre 5 et 20 nm.

14. Utilisation selon l'une des revendications précédentes, caractérisée en **ce qu**'est disposée sous le revêtement (3) à propriété photocatalytique au moins une couche mince (2) à fonction anti-statique, thermique, optique.

15. Utilisation selon la revendication 14, **caractérisée en ce que** la couche mince (2) à fonction anti-statique, éventuellement à polarisation contrôlée, et/ou thermique et/ou optique est à base de matériau conducteur du type métal ou du type oxyde métallique dopé tel que ITO, SnO₂:F, ZnO :In, ZnO :F, ZnO :Al, ZnO :Sn ou oxyde métallique sous-stoechiométrique en oxygène comme SnO₂₋ₓ ou ZnO₂₋ₓ avec x < 2.

16. Utilisation selon la revendication 14, **caractérisée en ce que** la couche mince (2) à fonction optique est à base d'un oxyde ou d'un mélange d'oxydes dont l'indice de réfraction est intermédiaire entre celui du revêtement et celui du substrat, notamment choisi(s) parmi les oxydes suivants : Al₂O₃, SnO₂, In₂O₃, oxycarbure ou oxynitrure de silicium.

17. Utilisation selon l'une des revendications précédentes, **caractérisée en ce que** la couche mince (2) à fonction de barrière aux alcalins est à base d'oxyde, de nitrure, d'oxynitrure ou d'oxycarbure de silicium, d'Al₂O₃:F ou de nitrure d'aluminium.

18. Utilisation d'un substrat selon l'une des revendications 1 à 17, **caractérisée en ce qu'**il est en verre sodo-calcique et qu'il est utilisé en tant que vitrage auto-nettoyant, anti-buée et/ou anti-salissures.
